(19) **Europäisches Patentamt / European Patent Office / Office européen des brevets**

(11) **EP 2 682 792 B1**

(12) **EUROPEAN PATENT SPECIFICATION**

(45) Date of publication and mention
of the grant of the patent:
**12.09.2018 Bulletin 2018/37**

(21) Application number: **12753034.3**

(22) Date of filing: **02.03.2012**

(51) Int Cl.:
**G02B 5/30** (2006.01)

(86) International application number:
**PCT/JP2012/055397**

(87) International publication number:
**WO 2012/118185 (07.09.2012 Gazette 2012/36)**

(54) **METHOD FOR MANUFACTURING POLARIZING FILM**

VERFAHREN ZUR HERSTELLUNG EINER POLARISATIONSFOLIE

PROCÉDÉ DE FABRICATION D'UN FILM POLARISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.03.2011 JP 2011046570**

(43) Date of publication of application:
**08.01.2014 Bulletin 2014/02**

(73) Proprietor: **Sekisui Chemical Co., Ltd.
Osaka 530-8565 (JP)**

(72) Inventors:
• **SHOUHI, Hajime
Mishima-gun
Osaka 618-0021 (JP)**

• **NAKATA, Masakazu
Mishima-gun
Osaka 618-0021 (JP)**

(74) Representative: **Ter Meer Steinmeister & Partner
Patentanwälte mbB
Nymphenburger Straße 4
80335 München (DE)**

(56) References cited:
JP-A- 7 306 316        JP-A- 58 111 002
JP-A- S58 111 002      JP-A- 2003 237 012
JP-A- 2007 140 127     JP-A- 2011 227 450

## Description

### TECHNICAL FIELD

The present invention relates to a method of manufacturing a polarizing film using a poly(vinyl alcohol) -based resin film and a poly (vinyl alcohol) -based resin for a polarizing film. In more detail, the present invention relates, further, to a method of manufacturing a polarizing film wherein a poly(vinyl alcohol)-based resin film can be dyed in a short time, and a poly(vinyl alcohol)-based resin for a polarizing film.

### BACKGROUND ART

Conventionally, polarizing films which are formed by using poly(vinyl alcohol) (may be referred to as PVA, hereinafter) based resin films are widely used in liquid crystal displays.

When a polarizing film is manufactured by using the above-described PVA-based resin film, the PVA-based resin film is dyed after being uniaxially stretched, and then the PVA-based resin film is subjected to fixation treatment using aqueous boric acid solution or the like. Alternatively, the PVA-based resin film is uniaxially stretched after being dyed, and then the PVA-based resin is subjected to fixation treatment with aqueous boric acid solution or the like.

For example, Patent Document 1 described below discloses a polarizing film using a PVA-based resin film and a method of manufacturing a polarizing film. Patent Document 1 discloses a PVA-based resin film which has a width of 2 m or more, a retardation difference between two points 1 cm distant from each other in width direction of 5 nm or less, and a retardation difference between two points 1 m distant from each other in width direction of 50 nm or less. Patent Document 1 describes that this PVA-based resin film has few dyeing unevenness, and is able to be evenly stretched.

In a polarizing film, excellent polarizing properties are strongly required. Patent Document 1 describes that a saponification degree of PVA is preferably 95 mol% or more, and most preferably 99.5 mol% or more from the viewpoint of polarizing properties and durability.

For example, Patent Document 2 described below discloses a polarizing plate which is obtained by applying PVA onto a supporting film to form a PVA layer; stretching the PVA layer together with the supporting film; followed by dyeing, and a method of manufacturing a polarizing plate. Patent Document 2 describes the use of a completely saponified-type PVA with a saponification degree of 98.0 to 99.9 mol% and a polymerization degree of 1700 to 2600. JPS58111002A describes a method of manufacturing a polarizing film using a PVA based resin wherein the resin has a saponification degree of 98% and a polymerization degree of 2500.

### Related Art Document

### Patent Document

Patent Document 1: JP 3422759 B1
Patent Document 2: JP 2000-338329 A

### SUMMARY OF THE INVENTION

### PROBLEMS TO BE SOLVED BY THE INVENTION

When a polarizing film is manufactured by using a conventional PVA-based resin film as described in Patent Document 1, the film is dyed with an aqueous potassium iodide solution or the like and then the film is uniaxially stretched. Alternatively, after being uniaxially stretched, the film is subjected to dyeing treatment using an aqueous potassium iodide solution or the like. Then, fixation treatment is performed with an aqueous boric acid solution or the like after the dyeing and stretching. In this case, in order to obtain a polarizing film with excellent polarizing properties and few dyeing unevenness, dyeing and fixation treatment takes a relatively long time. As a result, a problem that a productivity of polarizing films with few dyeing unevenness becomes low is caused.

In addion, in the method of manufacturing a polarizing plate described in Patent Document 2, a film is immersed in warm water for swelling and then immersed in an aqueous iodine/potassium iodide solution to adsorb iodine. Next, after being immersed in an aqueous boric acid/potassium iodide solution, the film is dyed and fixed by drying treatment at 50°C for 5 minutes to obtain a polarizing film. Also in this case, dyeing and fixation treatment takes a relatively long time, a problem that a productivity of polarizing films becomes low is caused.

An object of the present invention is to provide a method of manufacturing a polarizing film in which method a film is able to be satisfactorily dyed in a short time and fixed in a shortened time, and thus the productivity of a polarizing film with few dyeing unevenness can be dramatically increased, and a poly(vinyl alcohol)-based resin for a polarizing film which can improve the productivity of a polarizing film with few dyeing unevenness.

## MEANS FOR SOLVING THE PROBLEMS

In a broad aspect of the present invention, the present invention, as defined in the appended claims, provides a method of manufacturing a polarizing film comprising the steps of: preparing a poly (vinyl alcohol) -based resin film formed by using a poly(vinyl alcohol)-based resin having a saponification degree of 94 to 98.5 mol% obtained in accordance with JIS K6726 and a polymerization degree of 2550 to 3000; and obtaining a polarizing film by using the poly (vinyl alcohol)-based resin film.

In a certain aspect of the method of manufacturing a polarizing film according to the present invention, the step of obtaining a polarizing film comprises the steps of: dyeing the poly(vinyl alcohol)-based resin film; stretching the poly (vinyl alcohol) -based resin film; and fixing the dye on the poly(vinyl alcohol)-based resin film.

In another aspect of the method of manufacturing a polarizing film according to the present invention, the step of preparing a poly (vinyl alcohol) -based resin film is the step of obtaining the poly(vinyl alcohol)-based resin film by casting a resin solution containing the poly(vinyl alcohol)-based resin and a solvent onto a support, followed by drying.

## EFFECT OF THE INVENTION

The method of manufacturing a polarizing film according to the present invention uses a poly (vinyl alcohol) -based resin film having a saponification degree of 94 to 98.5 mol% and a polymerization degree of 2500 to 3000, and therefore the method of the present invention is able largely to shorten the time for dyeing as compared with a method of manufacturing a polarizing film using a conventional poly (vinyl alcohol) -based resin film. Further, the time of fixation treatment performed after dyeing can be also largely reduced. In addition, polarizing properties are not much lowered. Accordingly, it is possible to obtain, with high productivity, a polarizing film using a poly(vinyl alcohol)-based resin and having good polarizing properties.

The poly (vinyl alcohol)-based resin for a polarizing film used in the present invention has excellent dyeability owing to the saponification degree of 94 to 98.5 mol% and the polymerization degree of 2500 to 3000. Therefore, it is possible to largely increase the productivity of polarizing films with few dyeing unevenness.

## MODE(S) FOR CARRYING OUT THE INVENTION

In the following, the present invention will be described in detail.

(Poly(vinyl alcohol)-based Resin)

A poly(vinyl alcohol) (may be referred to as PVA hereafter) based resin used in the method of manufacturing a polarizing film according to the present invention is obtained by polymerizing a vinyl ester to yield a polymer, followed by saponifying, that is, hydrolyzing the obtained polymer. It is possible to obtain a PVA-based resin by polymerizing a vinyl ester to yield a polymer, followed by saponifying the obtained polymer according to a conventionally well-known method. In the present invention, the saponification degree of the PVA-based resin is a value measured in accordance with JIS K6726 and is required to be 94 to 98.5 mol%. The above-described saponification degree is preferably less than 98.5 mol%, and more preferably less than 98 mol%. The PVA-based resin may be a resin having vinyl alcohol units or a poly(vinyl alcohol) resin.

The saponification degree is a value obtained by the measurement in accordance with JIS K6726. The saponification degree indicates the ratio of the units actually converted to vinyl alcohol units by saponification among units to be converted to vinyl alcohol units by saponification. Too small degree of saponification may lead to the dissolution of PVA-based resin film during manufacturing process and the lowering of polarizing properties of the polarizing film. Too large degree of saponification results in the necessity of a long time for dyeing and incapability of increasing the productivity of the polarizing film.

A method of adjusting the saponification degree is not particularly limited. The saponification degree can be adjusted appropriately by saponification conditions, that is, hydrolysis conditions.

As the vinyl esters, vinyl acetate, vinyl formate, vinyl propionate, vinyl butylate, vinyl pivalate, vinyl versatate, vinyl laurate, vinyl stearate, vinyl benzoate and the like may be used.

The polymer obtained by polymerizing the vinyl ester may be a copolymer of the vinyl ester with other monomers. In other words, the PVA-based resin may be formed by using a copolymer of a vinyl ester with other monomers. Examples of the other monomers, that is, comonomers to be copolymerized include olefins such as ethylene, propylene, 1-butene, and isobutene; (meth) acrylic acid and salts thereof; (meth) acrylic acid esters such as methyl (meth)acrylate, ethyl (meth)acrylate, n-propyl (meth)acrylate, i-propyl (meth)acrylate, n-butyl (meth)acrylate, and 2-ethylhexyl (meth)acrylate; (meth)acrylamide derivatives such as acrylamide, n-methylacrylamide, N-ethylacrylamide, N,N-dimethylacrylamide, (meth)acrylamidopropane sulfonic acid and salts thereof; N-vinyl amides such as N-vinylpyrrolidone; vinyl ethers such as methyl vinyl ether, ethyl vinyl ether, n-propyl vinyl ether, i-propyl vinyl ether, and n-butyl vinyl ether; nitriles such as acrylonitrile and methacrylonitrile; vinyl halides such as vinyl chloride and vinylidene chloride; allyl compounds such as allyl acetate and allyl chloride; maleic acid and salts thereof or esters thereof; itaconic acid and salts thereof or esters thereof; vinyl silyl compounds such as vinyl trimethoxysilane; iso-propyl acetate; and the like. The other monomers may be used alone or in combination of two or more kinds of them.

In the case where the PVA and the other monomers are copolymerized to yield modified PVA, the amount of modifying monomer is preferably 15 mol% or less, and more preferably 5 mol% or less. In other words, structure units derived from the vinyl ester are preferably 85 mol% or more, and more preferably 95 mol% or more, and structure units derived from the other monomers are preferably 15 mol% or less, and more preferably 5 mol% or less in 100 mol% of the total of the structure units derived from the vinyl ester and the structure units derived from the other monomers in the modified PVA. Herein, modified poly(vinyl alcohol) (modified PVA) is included in poly(vinyl alcohol) (PVA).

Examples of polymerization catalysts used in the polymerization of the vinyl ester include 2-ethylhexyl peroxydicarbonate (trade name "Trigonox EHP" made by Tianjin McEIT Co., Ltd.), 2,2'-azobis-isobutylonitrile (AIBN), t-butyl peroxyneodecanoate, bis(4-t-butylcyclohexyl)peroxydicarbonate, di-n-propyl peroxydicarbonate, di-n-butyl peroxydicarbonate, di-cetyl peroxydicarbonate, di-s-butyl peroxydicarbonate and the like. The polymerization catalysts may be used alone or in combination of two kinds or more of them.

The PVA-based resin is required to have a polymerization degree of 2500 to 3000. If the polymerization degree is in the above-described range, the PVA-based resin film is hard to be deformed in the treatment of dyeing in a solution, at the exposure to high temperature and high humidity, and at a contact with water. Thus, the resistance of the obtained polarizing film to water can be enhanced and the yield in the manufacturing process can be improved, and the productivity of polarizing films can be increased. A polymerization degree of the PVA-based resin is 2550 or more, and preferably 2600 or more. If the polymerization degree of the PVA-based resin exceeds the above-described lower limit, or the polymerization degree is the lower limit or more, the dissolution of the PVA-based resin in a solution can be prevented when treated with a solution for dyeing. A polymerization degree of the PVA-based resin is preferably less than 3000, more preferably 2950 or less, and even more preferably 2900 or less. If the polymerization degree of the PVA-based resin is less than the above-described upper limit, or the polymerization degree is the upper limit or less, the time for dyeing can be shortened, and the productivity of polarizing films can be further increased.

If the polymerization degree is too low, the solubility of the PVA-based resin to a solvent becomes high, resulting in a reduction in strength of the polarizing film. Further, deformation and dyeing unevenness occur in the dyeing process. Hence, if the polymerization degree is too low, polarizing films are extremely hard to be manufactured with high productivity in spite of the adjustment of saponification degree from the viewpoint of shortening dyeing time. If the polymerization degree is too high, the solubility of the PVA-based resin to a solvent becomes low, resulting in the difficulty of the film formation by solution casting. The polymerization degree can be measured in accordance with JIS K6726.

In the prepration of the resin film formed by using the PVA-based resin, a method which makes the PVA-based resin into a film in an appropriate manner can be used. Preferably, a method is used in which a PVA-based resin solution containing the PVA-based resin and a solvent is cast onto a support and dried. The PVA-based resin solution containing the PVA-based resin and a solvent is suitably used to obtain the polarizing film. The method is suitably used in which the PVA-based resin solution is cast onto a support and dried. Examples of methods for applying onto a support include various methods such as wire bar coating, reverse coating, gravure coating, die coating, comma coating, lip coating, spin coating, screen coating, fountain coating, dipping, spray and the like.

The solvent is not particularly limited, and a solvent which is capable of dissolving the PVA-based resin can be suitably used. Examples of the solvent include water, organic solvents and the like. The solvent may be used alone or in combination of two or more kinds of the solvents.

Examples of the organic solvents include dimethyl sulfoxide, dimethyl formamide, dimethyl acetamide, N-methyl pyrrolidone, ethylene glycol, glycerol, propylene glycol, diethylene glycol, triethylene glycol, tetraethylene glycol, trimethylol propane, ethylenediamine, diethylenetriamine, diglycerol and the like.

It is preferred that the solvent contains water, glycerol or dimethyl sulfoxide, because of excellent solubility for the PVA-based resins. The solvent preferably contains water, preferably contains glycerol, and preferably contains dimethyl sulfoxide. The solvent is preferably water, a mixed solvent of water and glycerol, or dimethyl sulfoxide because of excellent solubility for the PVA-based resin. It is particularly preferred that the solvent contains water. It is especially preferred that the PVA-based resin solution contains water.

If necessary, the PVA-based resin solution may contain a plasticizer and may contain a surfactant. The use of a plasticizer heightens stretchability of the PVA-based resin film.

The plasticizer is not particularly limited, but a polyhydric alcohol is suitably used. The polyhydric alcohol may be used as the solvent. In other words, the polyhydric alcohol acts as a plasticizer, and further is used as a solvent. The solvent preferably contains the polyhydric alcohol. Examples of the polyhydric alcohol include ethylene glycol, glycerol, propylene glycol, diethylene glycol, diglycerol, triethylene glycol and the like. The polyhydric alcohol may be added alone or in combination of two or more kinds of them. In order to heighten the stretchability of the PVA-based resin film, diglycerol, ethylene glycol and glycerol are preferable.

The content of the polyhydric alcohol in the PVA-based resin solution is preferably 1 to 25 parts by weight based on 100 parts by weight of the PVA-based resin. If the content of the polyhydric alcohol is 1 part by weight or more, the dyeability and stretchability can be further heightened. If the content of the polyhydric alcohol is 25 parts by weight or less, the handleability of the PVA-based resin film in dyeing and stretching are improved.

The surfactant is not particularly limited, and an appropriate anionic or nonionic surfactant can be used.

The concentration of the PVA-based resin in the PVA-based resin solution is not particularly limited, but is preferably 3 weight% or more, more preferably 5 weight% or more, even more preferably 6 weight% or more, and particularly preferably 7 weight% or more; preferably 30 weight% or less, more preferably 20 weight% or less, even more preferably 15 weight% or less, and particularly preferably 12 weight% or less. If the concentration of the PVA-based resin is the lower limit or more, the drying does not need a long time, and a PVA-based resin film with good quality of film can be obtained. If the concentration of the PVA-based resin is the upper limit or less, the solution casting becomes easy.

It is preferred that the support used in the solution casting is able to maintain the PVA-based resin solution on its surface and support the PVA-based resin at the time of solution casting. The support is preferably in the form of film and preferably a supporting film. Examples of materials of the support include polyolefins, polyethylene terephthalate, acrylic resins and the like. Examples of the polyolefins include ethylene, polypropylene and the like.

From the viewpoint of obtaining a thickness suitable for a polarizing film, the thickness of the PVA-based resin film formed on the support by solution casting, as the thickness of the PVA-based resin film after stretching, is preferably 5 to 50 $\mu$m.

As a drying method after solution casting, an appropriate method can be used without particular limitation. Examples of the drying method include a spontaneous drying method, a heating drying method and the like.

(Method of Manufacturing Polarizing Film)

The method of manufacturing a polarizing film according to the present invention includes the step of: preparing a poly(vinyl alcohol)-based resin film formed by using the poly(vinyl alcohol)-based resin; and obtaining a polarizing film by using the poly(vinyl alcohol)-based resin film.

Examples of the method of manufacturing a polarizing film include 1) a method of manufacturing a polarizing film, the method including the steps of: dyeing the PVA-based resin film; stretching the PVA-based resin film after dyeing; and fixing the PVA-based resin film after dyeing and stretching; 2) a method of manufacturing a polarizing film, the method including the steps of: dyeing the PVA-based resin film, and stretching the PVA-based resin film; and fixing the PVA-based resin film after dyeing and stretching; 3) a method of manufacturing a polarizing film, the method including the steps of: stretching the PVA-based resin film; dyeing the PVA-based resin film after stretching; and fixing the PVA-based resin film after dyeing and stretching; 4) a method of manufacturing a polarizing film, the method including the steps of: dyeing the PVA-based resin film; and stretching and fixing the PVA-based resin film after dyeing; and the like.

It is preferred in the method of manufacturing a polarizing film according to the present invention that the step of obtaining a polarizing film includes the dyeing step of dyeing the PVA-based resin film; the stretching step of stretching the PVA-based resin film; and the fixing treatment step of fixing the dyeing of the PVA-based resin film. In this case, the PVA-based resin film may be stretched during or after dyeing, or dyed after stretching. The fixation treatment may be executed after dyeing and during stretching, or after dyeing and stretching.

Upon dyeing the PVA-based resin film, appropriate dyes can be used. As the dyes, dichromatic dyes can be used such as iodine -potassium iodide, direct black 17, 19, and 154, direct brown 44, 106, 195, 210, and 223, direct red 2, 23, 28, 31, 37, 39, 79, 81, 210, 242, and 247, direct blue 1, 15, 22, 78, 90, 108, 151, 158, 202, 236, 249, and 270, direct violet 9, 12, 51, and 98, direct green 1, and 85, direct yellow 8, 12, 44, 86, and 87, direct orange 26, 39, 106, and 107. The dyes may be used alone or in combination of two kinds or more of them.

Upon dyeing, the PVA-based resin film may be immersed in a dye solution containing the dye. A dye solution may be applied onto the PVA-based resin film.

In the method in which the PVA-based resin film is formed onto a support by solution casting, the PVA-based resin film may be released from the support and then dyed. Alternatively, the PVA-based resin film supported on a support may be dyed in the state of being supported on a support. In the case where the PVA-based resin film supported on a support is dyed, dyeing is preferably executed after stretching. In any dyeing method, the PVA-based resin can be rapidly dyed in the present invention because the saponification degree is in the range of 94 to 98.5 mol%.

In the stretching step, the PVA-based resin film may be uniaxially stretched, or may be otherwise stretched other than uniaxial stretching. It is preferred that the PVA-based resin film is uniaxially stretched. The stretching method may be a wet stretching method and may be a dry stretching method. The stretching may be executed during dyeing. In this case, the PVA-based resin film may be stretched in the state of being immersed in a dye solution.

The PVA-based resin film may be stretched in the air after dyed by using a dye solution.

The stretching temperature is not particular limited, but is preferably 30°C or higher, and more preferably 50°C or higher; preferably 180°C or lower, and more preferably 90°C or lower. In the case where the PVA-based resin film by itself is stretched in a wet manner, the stretching temperature is preferably 30 to 90°C. In the case where the PVA-based resin film by itself is stretched in a dry manner, the stretching temperature is preferably 50 to 180°C. In the case where the PVA-based resin film is stretched in a dry manner in the state of being supported by a support or the like, the stretching temperature may be set appropriately to a temperature at which the support is stretched or higher, and a temperature at which deterioration or degradation of the PVA-based resin film is not caused or lower, depending upon the kind of the support. In the case where the PVA-based resin film is stretched in a dry manner in the state of being supported by a support or the like, the stretching temperature is, for example, preferably 30 to 130°C when the support is made of polypropylene, and preferably 60 to 140°C when the support is made of polyethylene terephthalate. If the support is applicable to stretching in a wet manner, wet stretching may be employed.

The draw ratio is preferably 4 times or more, and more preferably 5 times or more. The higher draw ratio can heighten the polarizing properties. If the draw ratio is too high, uniform stretching may not be possible. Accordingly, it is desirable that the draw ratio is 8 times or less.

In the present invention, the fixation treatment for fixing the orientation of dye is performed after dyeing and stretching, or after dyeing and during stretching. This fixation treatment can be executed according to a well-known method. That is, the fixation treatment can be performed by immersing the PVA-based resin film in a solution containing boron atoms. The solution containing boron atoms includes, for example, boric acid or a boron compound. The temperature at the fixation treatment is not particularly limited, and may be about 30 to 90°C.

As described above, in the case where the PVA-based resin film is formed on the support, the PVA-based resin film may be stretched after released from the support, or the PVA-based resin film may be stretched together with the support in the state where the PVA-based resin film is supported (laminated) on the support.

As described above, after the dyeing, stretching as well as fixation treatment, the polarizing film can be obtained by drying the PVA-based resin film. This drying may be performed by natural drying. In order to accelerate drying, heat drying is desirable. The heating temperature is preferably 30°C or higher, and more preferably 50°C or higher; preferably 150°C or lower, and more preferably 100°C or lower.

The polarizing film obtained as described above can largely shorten the time required for the dyeing step and the fixation step, because the polarizing film is obtained by using the PVA-based resin having a saponification degree of 94 to 98.5 mol% measured in accordance with JIS K6726 and a polymerization degree of 2500 to 3000. Further, because the PVA-based resin film can be sufficiently dyed in a short time, the obtained polarizing film has few dyeing unevenness. Accordingly, the polarizing film having few dyeing unevenness can be obtained with high productivity.

The polarizing film obtained as described above is used in various optical devices and display devices such as a polarizing plate of liquid crystal display. The polarizing film is preferably used to obtain a polarizing plate by laminating (a) protection film(s) on one side or both sides of the polarizing film. As the protection film, a cellulose triacetate (triacetyl cellulose, TAC) film, a cellulose acetate/butylate (CEB) film, an olefinic film, an acrylic film, and a polyester-based film and the like can be used. As an adhesive used for bonding to obtain a polarizing plate, a PVA-based adhesive and a urethane-based adhesive and the like can be used.

In the following, specific examples and comparative examples of the present invention are shown to clarify the effects of the present invention. The present invention is not, however, limited to the following examples.

PVA-based resins used in Examples 2 to 10 and Comparative Example 5 described below are PVA-based resins made by the polymerization of vinyl acetate and saponification according to a common method. The polymerization degree was controlled by polymerization conditions such as polymerization temperature and pressure. The saponification degree was controlled by hydrolysis conditions.

(Example 1) (not part of the invention)

Water was added to 100 parts by weight of a PVA-based resin with a saponification degree of 98.5 mol% (made by Sekisui Specialty Chemicals, trade name: CELVOL C350, polymerization degree 2500), to prepare an aqueous PVA-based resin solution with a concentration of the PVA-based resin of 10 weight%.

The obtained aqueous PVA-based resin solution was applied onto a polypropylene film (the thickness of 60 $\mu$m) as a supporting film and then dried to obtain a PVA-based resin film.

The PVA-based resin film supported on a supporting film was uniaxially stretched with the end free in a thermostat oven maintained at 110°C to obtain a film stretched 5.5 times. Next, the film was immersed in an aqueous solution containing 0.4g/L iodine and 40g/L potassium iodide at a temperature of 30°C for 120 seconds, and dyed. Then, the PVA-based resin film was immersed in an aqueous solution containing 60g/L boric acid and 30g/L potassium iodide together with the supporting film at 55°C for 2 minutes to obtain a polarizing film. The thickness of the obtained polarizing film was 20 $\mu$m. This polarizing film was laminated with a triacetyl cellulose film with a thickness of 80 $\mu$m to obtain a polarizing plate.

(Example 2) (not part of the invention)

A polarizing film was made and a polarizing plate was obtained in the same manner as in Example 1, except that a PVA-based resin with a saponification degree of 95 mol% (polymerization degree 2500) was used as the PVA-based resin.

(Example 3)

A polarizing film was made and a polarizing plate was obtained in the same manner as in Example 1, except that a PVA-based resin with a saponification degree of 98 mol% (polymerization degree 2700) was used as the PVA-based resin.

(Example 4)

A polarizing film was made and a polarizing plate was obtained in the same manner as in Example 1, except that a PVA-based resin with a saponification degree of 97 mol% (polymerization degree 2700) was used as the PVA-based resin.

(Example 5)

A polarizing film was made and a polarizing plate was obtained in the same manner as in Example 1, except that a PVA-based resin with a saponification degree of 96 mol% (polymerization degree 2700) was used as the PVA-based resin.

(Example 6)

A polarizing film was made and a polarizing plate was obtained in the same manner as in Example 1, except that a PVA-based resin with a saponification degree of 98 mol% (polymerization degree 2800) was used as the PVA-based resin.

(Example 7)

A polarizing film was made and a polarizing plate was obtained in the same manner as in Example 1, except that a PVA-based resin with a saponification degree of 97 mol% (polymerization degree 2800) was used as the PVA-based resin.

(Example 8)

A polarizing film was made and a polarizing plate was obtained in the same manner as in Example 1, except that a PVA-based resin with a saponification degree of 96 mol% (polymerization degree 2800) was used as the PVA-based resin.

(Example 9)

A polarizing film was made and a polarizing plate was obtained in the same manner as in Example 1, except that a PVA-based resin with a saponification degree of 95 mol% (polymerization degree 2900) was used as the PVA-based resin.

(Example 10)

A polarizing film was made and a polarizing plate was obtained in the same manner as in Example 1, except that a PVA-based resin with a saponification degree of 96 mol% (polymerization degree 2900) was used as the PVA-based resin.

(Comparative Example 1)

A polarizing film was made and a polarizing plate was obtained in the same manner as in Example 1, except that a PVA-based resin with a saponification degree of 99.3 mol% (made by Sekisui Specialty Chemicals, trade name: CELVOL C165, polymerization degree 2500) was used as the PVA-based resin.

(Comparative Example 2)

A polarizing film was made and a polarizing plate was obtained in the same manner as in Example 1, except that a PVA-based resin with a saponification degree of 99.3 mol% (made by Sekisui Specialty Chemicals, trade name: CELVOL C125, polymerization degree 1800) was used as the PVA-based resin.

(Comparative Example 3)

A polarizing film was made and a polarizing plate was obtained in the same manner as in Example 1, except that a PVA-based resin with a saponification degree of 99.3 mol% (made by Sekisui Specialty Chemicals, trade name: CELVOL C165, polymerization degree 2500) was used as the PVA-based resin and that the time for dyeing was 240 seconds and the time for treatment with boric acid was 5 minutes.

(Comparative Example 4)

A polarizing film was made and a polarizing plate was obtained in the same manner as in Example 1, except that a PVA-based resin with a saponification degree of 93 mol% (made by Sekisui Specialty Chemicals, trade name: CELVOL C543, polymerization degree 2450) was used as the PVA-based resin.

(Comparative Example 5)

A polarizing film was made and a polarizing plate was obtained in the same manner as in Example 1, except that a PVA-based resin with a saponification degree of 98 mol% (polymerization degree 2400) was used as the PVA-based resin.

(Evaluation of Examples and Comparative Examples)

(1) Measurement of polarization degree

The polarization degree P of each polarizing plate obtained in Examples 1 to 10 and Comparative Examples 1 to 5 was calculated by measuring cross transmittance and parallel transmittance by using a spectrophotometer UV-3101 PC manufactured by SHIMADZU CORPORATION. The polarization degree was determined based on the following criteria. If the cross transmittance is indicated as YC, and the parallel transmittance is indicated as YP, the polarization degree P is represented by the following equation.

$$\text{Polarization Degree P} = \{(YP - YC)/(YP + YC)\}^{1/2}$$

[Criteria for determination of polarization degree]

◯: Polarization degree is 99 or more.
△: Polarization degree is 90 or more and less than 99.
x: Polarization degree is less than 90.

(2) Evaluation of dyeing unevenness

Each polarizing film obtained in Examples 1 to 10 and Comparative Examples 1 to 5 was observed to evaluate dyeing unevenness based on the following criteria.

[Criteria for determination of dyeing unevenness]

○: No dyeing unevenness is found at all.
Δ: Dyeing unevenness is found.
x: Deformation in addition to dyeing unevenness is found.

The results are shown in Table 1 below.

Table 1

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| POLYMERIZATION DEGREE | 2500 | 2500 | 2700 | 2700 | 2700 | 2800 | 2800 | 2800 | 2900 | 2900 |
| SAPONIFICATION DEGREE (mol%) | 98.5 | 95.0 | 98.0 | 97.0 | 96.0 | 98.0 | 97.0 | 96.0 | 95.0 | 96.0 |
| TIME FOR DYEING (second) | 120 | 120 | 120 | 120 | 120 | 120 | 120 | 120 | 120 | 120 |
| TIME FOR TREATMENT WITH BORIC ACID (minute) | 2 | 2 | 2 | 2 | 2 | 2 | 2 | 2 | 2 | 2 |
| POLARIZATION DEGREE | ○ | ○ | ○ | ○ | ○ | ○ | ○ | ○ | ○ | ○ |
| DYEING UNEVENNESS | ○ | ○ | ○ | ○ | ○ | ○ | ○ | ○ | ○ | ○ |

| | Comp. Ex. 1 | Comp. Ex. 2 | Comp. Ex. 3 | Comp. Ex. 4 | Comp. Ex. 5 |
|---|---|---|---|---|---|
| POLYMERIZATION DEGREE | 2500 | 1800 | 2500 | 2450 | 2400 |
| SAPONIFICATION DEGREE (mol%) | 99.3 | 99.3 | 99.3 | 93.0 | 98.0 |
| TIME FOR DYEING (second) | 120 | 120 | 240 | 120 | 120 |
| TIME FOR TREATMENT WITH BORIC ACID (minute) | 2 | 2 | 5 | 2 | 2 |
| POLARIZATION DEGREE | × | × | ○ | ○ | ○ |
| DYEING UNEVENNESS | △ | × | △ | × | △ |

As is apparent from Table 1, although in Comparative Examples 1 and 2, the time for dyeing was 120 seconds and the time for treatment with boric acid was 2 minutes similarly to Examples 1 to 10, the polarization degrees of obtained polarizing films were as low as less than 90. In Comparative Example 3, although the polarization degree of the polarizing film is satisfactory, the dyeing took 240 seconds, and the fixation treatment with boric acid took 5 minutes, that is, the fixation treatment took a very long time. Further, in Comparative Examples 1 to 3, the deformation and dyeing unevenness in the polarizing films were found.

In Comparative Examples 4 and 5, although the fixation treatment time and polarization degrees of the polarizing films were both satisfactory, the deformation and dyeing unevenness of the polarizing films were found.

In contrast, in Examples 1 to 10, although the time for dyeing was shortened to 120 seconds and the fixation treatment time to 2 minutes, the polarization degrees of the obtained polarizing films were satisfactory. Further, the deformation and dyeing unevenness of the obtained polarizing films ware hardly found. Accordingly, it can be understood that in Examples 1 to 10 using PVA-based resins having low saponification degrees and high polymerization degrees, polarizing films having few dyeing unevenness in addition to satisfactory polarizing properties can be obtained in high productivity.

## Claims

1. A method of manufacturing a polarizing film comprising the steps of:

   obtaining a poly (vinyl alcohol)-based resin film formed by casting an aqueous poly(vinyl alcohol)-based resin solution onto a support, followed by drying the aqueous poly(vinyl alcohol)-based resin solution cast onto the support, the aqueous poly(vinyl alcohol)-based resin solution containing a poly(vinyl alcohol)-based resin and water as a solvent which is capable of dissolving the poly(vinyl alcohol)-based resin , the poly(vinyl alcohol)-based resin having a saponification degree of 94 to 98.5 mol% obtained in accordance with JIS K6726 and a polymerization degree of 2550 to 3000; and
   obtaining a polarizing film by using the poly(vinyl alcohol)-based resin film.

2. The method of manufacturing a polarizing film according to claim 1,
   wherein the step of obtaining a polarizing film comprises the steps of: dyeing the poly (vinyl alcohol)-based resin film; stretching the poly (vinyl alcohol) -based resin film; and fixing the dye on the poly(vinyl alcohol)-based resin film.

## Patentansprüche

1. Verfahren zur Herstellung einer Polarisationsfolie, umfassend die Schritte:
   Erzielen einer Poly(vinylalkohol)-basierten Harzfolie, gebildet durch Gießen einer wässrigen Poly(vinylalkohol)-basierten Harzlösung auf einen Träger, worauf Trocknung der auf den Träger gegossenen, wässrigen Poly(vinylalkohol)-basierten Harzlösung erfolgt, wobei die wässrige Poly(vinylalkohol)-basierte Harzlösung ein Poly(vinylalkohol)-basiertes Harz und Wasser als ein Lösungsmittel enthält, das in der Lage ist, das Poly(vinylalkohol)-basierte Harz zu lösen, wobei das Poly(vinylalkohol)-basierte Harz einen Verseifungsgrad von 94 bis 98,5 Mol%, erzielt gemäß JIS K6726, und einen Polymerisationsgrad von 2550 bis 3000 aufweist; und Erzielen einer Polarisationsfolie durch Verwendung der Poly(vinylalkohol)-basierten Harzfolie.

2. Verfahren zur Herstellung einer Polarisationsfolie nach Anspruch 1, wobei der Schritt des Erzielens einer Polarisationsfolie die Schritte umfasst: Färben der Poly(vinylalkohol)-basierten Harzfolie; Recken der Poly(vinylalkohol)-basierten Harzfolie; und Fixieren des Farbstoffs auf der Poly(vinylalkohol)-basierten Harzfolie.

## Revendications

1. Un procédé de fabrication d'un film polarisant comprenant les étapes consistant à:

   obtenir un film de résine à base d'alcool polyvinylique préparé par distribution d'une solution de résine à base d'alcool polyvinylique aqueuse sur un support, suivi par séchage de la solution de résine à base d'alcool polyvinylique aqueuse distribuée sur le support, la solution de résine à base d'alcool polyvinylique aqueuse contenant une résine à base d'alcool polyvinylique et de l'eau en tant que solvant qui est capable de dissoudre la résine à base d'alcool polyvinylique, la résine à base d'alcool polyvinylique ayant un degré de saponification de 94 à 98,5 % en moles obtenu selon JIS K6726 et un degré de polymérisation de 2550 à 3000; et
obtenir un film polarisant en utilisant le film de résine à base d'alcool polyvinylique.

2. Le procédé de fabrication d'un film polarisant selon la revendication 1,
dans lequel l'étape d'obtention d'un film polarisant comprend les étapes consistant à: teindre le film de résine à base d'alcool polyvinylique ; étirer le film de résine à base d'alcool polyvinylique ; et fixer le colorant sur le film de résine à base d'alcool polyvinylique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S58111002 A
- JP 3422759 B
- JP 2000338329 A